# EUROPEAN PATENT APPLICATION

(11) **EP 4 822 472 A2**
(43) Date of publication of application: **14.10.2026**
(21) Application number: 26201576.1
(22) Date of filing: 28.08.2026
(51) Int. Cl.: G05D 1/224, G01C 21/20, G05D 1/243, G05D 1/246, G06T 19/00, G06V 20/10, G05D 107/40, G05D 109/10, G05D 111/10

(54) **METHOD FOR NAVIGATING AN INTELLIGENT AGENT AND METHOD FOR TRAINING VISUAL NAVIGATION MODEL**

(30) Priority: 16.03.2026 CN 202610321121
(71) Applicant: Beijing Baidu Netcom Science Technology Co., Ltd., Beijing 100085 (CN)
(72) Inventor: Li, Yuchen, Beijing, 100085 (CN); Feng, Shuo, Beijing, 100085 (CN); Kong, Rui, Beijing, 100085 (CN); Chen, Xinran, Beijing, 100085 (CN); Cai, Hengyi, Beijing, 100085 (CN)
(74) Representative: Haverkamp Patentanwälte PartG mbB

(57) **Abstract**

The present disclosure provides a method for navigating an intelligent agent, a method for training a visual navigation model and apparatuses, relating to the field of artificial intelligence technology and particularly to the technical fields such as an embodied intelligent agent, deep learning, intelligent transportation, and/or machine vision, etc. The method for navigating an intelligent agent includes: in response to a navigation path drawn on a visual image of a target scene, generating (S101) a visual navigation cue map; collecting (S102) an environmental image of the intelligent agent in real time; and matching (S103), based on a visual navigation model, a real-time collected environmental image with the visual navigation cue map, to control the intelligent agent to move along the navigation path.

## Description

### TECHNICAL FIELD

The present disclosure relates to the field of artificial intelligence technology, and particularly to the technical fields such as an embodied intelligent agent, deep learning, intelligent transportation, and/or machine vision, etc.

### BACKGROUND

With the advancement of artificial intelligence technology, the functionality and application of a robot have been further expanded. For instance, common robot types at present include a human-robot interactive robot, a service robot (e.g., a hotel service robot), an industrial robot (e.g., a safety inspection robot), a logistics robot and a household robot (e.g., a companion robot), which collaborate with humans to complete tasks through diverse interaction modalities.

In related art, a robot may receive a voice navigation instruction from a user, autonomously plan a path by interpreting the voice navigation instruction, and then move to a destination based on the planned path, to complete the corresponding task.

### SUMMARY

The present disclosure provides a method for navigating an intelligent agent, a method for training a visual navigation model and apparatuses.

According to one aspect of the present disclosure, provided is a method for navigating an intelligent agent, including:
in response to a navigation path drawn on a visual image of a target scene, generating a visual navigation cue map;
collecting an environmental image of the intelligent agent in real time; and
matching, based on a visual navigation model, a real-time collected environmental image with the visual navigation cue map, to control the intelligent agent to move along the navigation path.

According to another aspect of the present disclosure, provided is a method for training a visual navigation model of an intelligent agent, including:
acquiring a sample cue map, where the sample cue map includes a visualized navigation path; and
training the visual navigation model based on the sample cue map.

According to one aspect of the present disclosure, provided is an apparatus for navigating an intelligent agent, including:
a generation module, configured to, in response to a navigation path drawn on a visual image of a target scene, generate a visual navigation cue map;
a collection module, configured to collect an environmental image of the intelligent agent in real time; and
a control module, configured to match, based on a visual navigation model, a real-time collected environmental image with the visual navigation cue map, to control the intelligent agent to move along the navigation path.

According to one aspect of the present disclosure, provided is an apparatus for training a visual navigation model of an intelligent agent, including:
an acquisition module, configured to acquire a sample cue map, where the sample cue map includes a visualized navigation path; and
a training module, configured to train the visual navigation model based on the sample cue map.

According to one aspect of the present disclosure, provided is an electronic device, including:
at least one processor; and
a memory connected in communication with the at least one processor;
where the memory stores an instruction executable by the at least one processor, and the instruction is executed by the at least one processor to enable the at least one processor to execute the method according to any one of the embodiments of the present disclosure.

According to another aspect of the present disclosure, provided is a non-transitory computer-readable storage medium storing a computer instruction thereon, and the computer instruction is used to cause a computer to execute the method according to any one of the embodiments of the present disclosure.

According to another aspect of the present disclosure, provided is a computer program product including a computer program, and the computer program implements the method according to any one of the embodiments of the present disclosure, when executed by a processor.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a schematic flowchart of a method for navigating an intelligent agent according to an embodiment of the present disclosure.
FIG. 2 is a schematic diagram of a visual navigation cue map according to an embodiment of the present disclosure.
FIG. 3 is a schematic diagram of a visual navigation model according to an embodiment of the present disclosure.
FIG. 4 is another schematic flowchart of a method for navigating an intelligent agent according to an embodiment of the present disclosure.
FIG. 5 is another schematic flowchart of a method for navigating an intelligent agent according to an embodiment of the present disclosure.
FIG. 6 is a schematic flowchart of a method for training a visual navigation model of an intelligent agent according to an embodiment of the present disclosure.
FIG. 7 is a schematic structural diagram of an apparatus for navigating an intelligent agent according to an embodiment of the present disclosure.
FIG. 8 is a schematic structural diagram of an apparatus for training a visual navigation model of an intelligent agent according to an embodiment of the present disclosure.
FIG. 9 is a block diagram of an electronic device used to implement a method for navigating an intelligent agent/a method for training a visual navigation model of an intelligent agent according to an embodiment of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The terms "first", "second", and the like in the present disclosure are used to distinguish similar objects and are not necessarily used to describe a specific order or sequence. Furthermore, the terms "include", "have" and any variations thereof are intended to cover non-exclusive inclusion, for example, containing a series of steps or units. A method, system, product or device is not necessarily limited to those steps or units listed clearly, but may include other steps or units that are not listed clearly or that are inherent to the process, method, product or device.

It should be noted that, unless it is explicitly stated that there is a sequential order of execution among different operations or that there is a sequential order of execution in technical implementation among different operations, the execution order of a plurality of operations shown in the flowcharts of the embodiments of the present disclosure may be arbitrary, and the plurality of operations may also be performed simultaneously.

In related art, Artificial Intelligence (AI) and robotics technology typically perform navigation based on natural language instructions from humans. However, natural language often struggles to precisely describe navigation trajectories when describing object positions, directional transitions or distance relationships. Furthermore, attempts to improve linguistic precision often lead to overly verbose expressions. This exposes an inherent contradiction in human-robot interaction: the precision of language often comes at the cost of excessive verbosity. However, overly verbose language instructions often impose high demands on users. In some tasks, an inaccurate voice description may lead to task failure, while a refined description increases the burden on users, resulting in a poor user experience.

In view of this, the embodiments of the present disclosure propose a method for navigating an intelligent agent. An intelligent agent is essentially a program or algorithm capable of implementing a "perception - decision - action" loop. The intelligent agent is goal-oriented and completes a specific task by receiving environmental information, performing reasoning and planning, and outputting an action instruction. This program has hardware independence, i.e., This program may exist independently of a specific physical device and may be ported to and run on any physical device with a corresponding sensor and actuator. When the program runs in a virtual space (e.g., on a server or in the cloud) and interacts with the environment through a data interface, the program manifests as a non-embodied intelligent agent (e.g., a recommendation system, etc.). When the program is deployed onto a physical entity, such as a robot, and/or an autonomous vehicle, etc., to perceive the real world by means of the sensor of the physical device and generate physical actions by using the actuator, the program becomes an embodied intelligent agent. An embodied intelligent agent refers to an intelligent system having a physical entity and is capable of perceiving and interacting with the real environment, for example, a service robot, a companion robot, an inspection robot, and the like.

Therefore, the intelligent core of the intelligent agent can be separated from the physical carrier: the same set of intelligent algorithms can be replicated and deployed on different hardware platforms, endowing various devices with autonomous action capabilities. The intelligent agent in the present disclosure can be either a non-embodied intelligent agent in the form of pure software, or an embodied intelligent agent formed by combining the software with a physical device.

The various steps in the method for navigating an intelligent agent provided by the embodiments of the present disclosure may be performed by the intelligent agent. In the case where the intelligent agent is configured with a robot and a computing device, and the robot and the computing device are separate (e.g., one platform controls a plurality of robots), the method may be performed by the computing device, or partially by the robot and partially by the computing device.

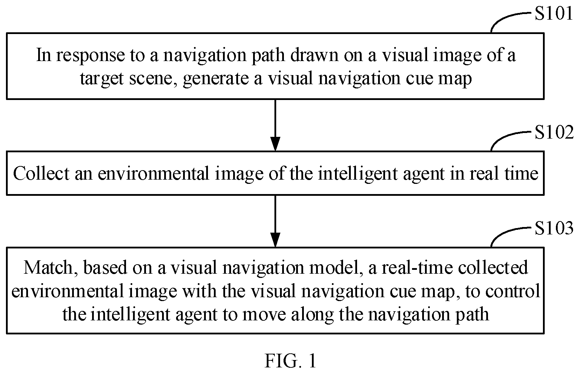

As shown in FIG. 1, the schematic flowchart of the method provided in the embodiments of the present disclosure includes the followings.

In S101, in response to a navigation path drawn on a visual image of a target scene, a visual navigation cue map is generated.

The target scene refers to a specific environmental space that the intelligent agent needs to reach or inside which to complete a navigation task. For both indoor navigation and outdoor navigation, the target scene may be the spatial activity range of the intelligent agent.

The embodiments of the present disclosure may rely on complete visual navigation. Therefore, the visual image is an image for describing the spatial layout of the target scene obtained by performing image collection on the target scene. The visual image contains the positions and shapes of various objects in the target scene.

During human-robot interaction, a user may draw a navigation path on a real image to replace a voice navigation instruction. The embodiments of the present disclosure do not limit the drawing manner, as long as elements on the path and the destination may be indicated.

The visual navigation cue map is an image obtained by superimposing the navigation path on the visual image of the target scene, and may serve as a template for visual matching by the intelligent agent. The visual navigation cue map is a final output image that fuses the path, an indication and a scene, and may be directly used as a navigation reference image for matching in the subsequent visual navigation model.

In the embodiments of the present disclosure, in order to enable the intelligent agent to better understand, the visual navigation cue map may contain path directions and/or key nodes.

In some embodiments, for the target scene, a 360° panoramic camera or a Three-Dimensional (3D) scanner with a LiDAR may be used to scan a plurality of points within the room, so as to capture a panoramic image and measure a spatial depth. The panoramic image and the spatial depth may then be processed by software such as a 3D spatial data platform (Matterport), a 3D scanning application (Polycam), or photogrammetric software (RealityCapture), etc., to generate an interactive 3D model of the target scene. Then, a top view or plan view of the target scene may be exported to obtain a visual image, i.e., the visual image is an overall top view containing the spatial structure and the distribution of objects within the space.

The top view allows for intuitive and clear observation of the spatial layout of the target scene and the relative positional relationships among different objects, such that the visual navigation cue map can express the requirements of the planned path and the destination in an intuitive and clear manner.

During implementation, for a plurality of stacked spaces, for example, a multi-floor building, each floor may be processed separately to obtain the top view of each floor. In the case where the navigation path crosses floors, the floor sequence of the navigation path may be encoded sequentially, so that the cross-floor navigation task can be completed based on the sequential encoding. Of course, the navigation control manner within each floor is the same.

In S102, an environmental image of the intelligent agent is collected in real time.

During implementation, the camera type may be selected according to the application scenario. For indoor low-speed scenarios, a monocular camera is adopted, which is low-cost and has a mature algorithm; when depth perception is required, a binocular camera is adopted; and for outdoor high-speed scenarios, a global shutter camera with high frame rate is adopted to reduce motion blur. The installation position of the camera should ensure that the field of view covers the direction of travel of the intelligent agent.

In S103, a real-time collected environmental image is matched with the visual navigation cue map, based on a visual navigation model, to control the intelligent agent to move along the navigation path.

In the embodiments of the present disclosure, the user does not need to have a precise language expression capability, but can express a navigation intention intuitively and accurately by drawing a navigation path. Under the visual guidance of the navigation path, by collecting the environmental image in real time and matching the environmental image with the navigation path in the visual navigation cue map in real time, the intelligent agent can be controlled to move along the navigation path. This human-robot interaction manner can effectively reduce understanding deviations caused by natural language ambiguity and complex descriptions, thereby reducing the cognitive burden on ordinary users in practical use. The visual navigation cue map can be understood and analyzed by the visual navigation model through the intuitive visual navigation cue, so as to improve the precision of visual navigation and improve the efficiency of navigation control of the intelligent agent.

In some embodiments, a user may draw a plurality of path key points on the visual image of the target scene. For example, the plurality of path key points may be generated by clicking operations in a human-robot interaction interface. Alternatively, by drawing a continuous curve on the human-robot interaction interface, and analyzing the relative positional relationship between the curve and various objects on the visual image, a plurality of points are sampled from the curve to obtain the path key points. Of course, in the case where the drawn curve intersects with surrounding objects, the curve may be calibrated before sampling the path key points. Thus, the plurality of path key points included on the navigation path may be obtained. Correspondingly, in order to enable the visual navigation cues to be fully understood and analyzed to improve the precision of navigation, in response to the navigation path drawn on the visual image of the target scene, generating the visual navigation cue map, may be implemented as follows.

In step A1, line connection is performed on the plurality of path key points sequentially in chronological order, and visual indication information pointing to a next path key point is generated.

During implementation, the path key points are discrete position nodes on the navigation path.

The chronological order is the order in which the user draws the path key points.

The visual indication information is a graphical symbol, and the graphical symbol is used to guide the viewing line of sight and the movement direction with respect to the target scene.

In some embodiments, the visual indication information may be implemented as an arrow. In the embodiments of the present disclosure, the visual indication information is indicated in the form of arrows, which can reduce decision-making confusion caused by path bidirectionality, and reduce thinking pauses of "left or right", thereby clarifying directionality and improving the precision of navigation.

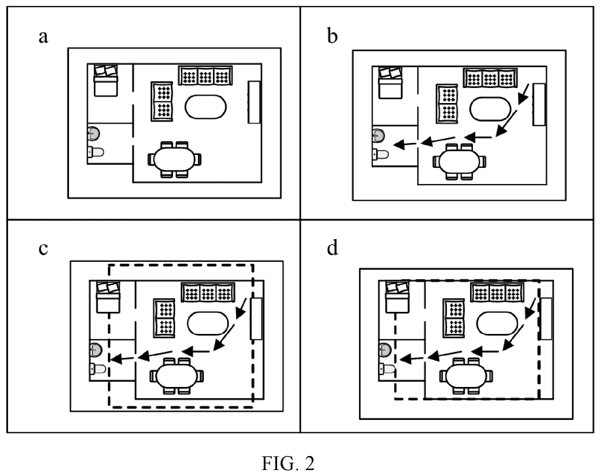

During implementation, a user may directly annotate the visual image. Exemplarily, as shown in FIG. 2, panel (a) of FIG. 2 is the visual image of the target scene. The user may directly annotate the visual image to draw path key points. After detecting that the user has finished drawing the path key points, the intelligent agent may perform line connection on the path key points sequentially based on the chronological order in which the user drew the path key points, and generate visual indication information pointing to a next path key point.

Regarding the drawing manner, in the case where the user uses a computer mouse, the path key point may be understood as follows: the user presses the left button of the mouse at the target position on the visual image and then releases the left button of the mouse, to obtain a corresponding path key point. In the case where the user uses a touchscreen, the operation trace may be understood as follows: the user taps the target position on the visual image with a stylus, to obtain a corresponding path key point.

It should be noted that, regardless of the drawing tool used, any manner that may express the user's drawing intention is acceptable, and the embodiments of the present disclosure do not impose any limitation in this regard.

In step A2, a connecting line with the visual indication information is added into the visual image, to obtain the visual navigation cue map.

In the embodiments of the present disclosure, by performing line connection on the path key points, the entire guidance path is presented in the visual image in a more intuitive and easy-to-understand manner, thereby making the guidance manner more explicit and improving the overall navigation efficiency.

In some embodiments, the connecting line includes a straight-line segment. Using the continuous straight-line segment as the connecting line can clearly indicate the direction to the next path key point and clarify the positions of key nodes during movement, thereby making the visual prompt navigation more concise and easier for the model to understand, and thus improving the precision of navigation under this constraint.

In some embodiments, in order to improve the guidance capability and processing efficiency of the visual navigation cue for the visual navigation model, the embodiments of the present disclosure may reduce the interference of edge features (exemplarily, the edge features may be traversable boundaries other than the navigation path in the image) on the understanding of the visual navigation model. Accordingly, adding the connecting line with the visual indication information into the visual image to obtain the visual navigation cue map may be implemented as follows.

In step B1, the connecting line with the visual indication information is mapped into the visual image according to positions, to obtain a mapped image.

The connecting line generated based on the path key points drawn by the user is mapped into the visual image, to obtain the mapped image required for navigation of the intelligent agent. Exemplarily, the mapped image is shown in panel (b) of FIG. 2.

In step B2, a local region is cropped from the mapped image, to obtain the visual navigation cue map, where the local region contains the connecting line with the visual indication information.

During implementation, a rectangular box that contains the connecting line with the visual indication information may be first cropped from the mapped image in the horizontal direction, serving as an image to be processed, as shown in panel (c) of FIG. 2. Then, along the vertical direction of the mapped image, edge features (exemplarily, the edge features may be white edges or the like outside the actual scene in FIG. 2) in the image to be processed are removed in the longitudinal direction of the mapped image, to obtain the visual navigation cue map, as shown in panel (d) of FIG. 2.

In the embodiments of the present disclosure, the visual image of the target scene contains relatively rich information. However, in the case where the navigation path only covers a local region, the visual image will contain excessive redundant information unrelated to the navigation path. Since the time navigation requires real-time processing of visual information, the real-time processing burden is heavy. By cropping out irrelevant regions, i.e., preserving the global information of the navigation path for the purpose of visual navigation cueing, it is also possible to reduce interference from irrelevant image information and resource consumption, thereby improving navigation control efficiency.

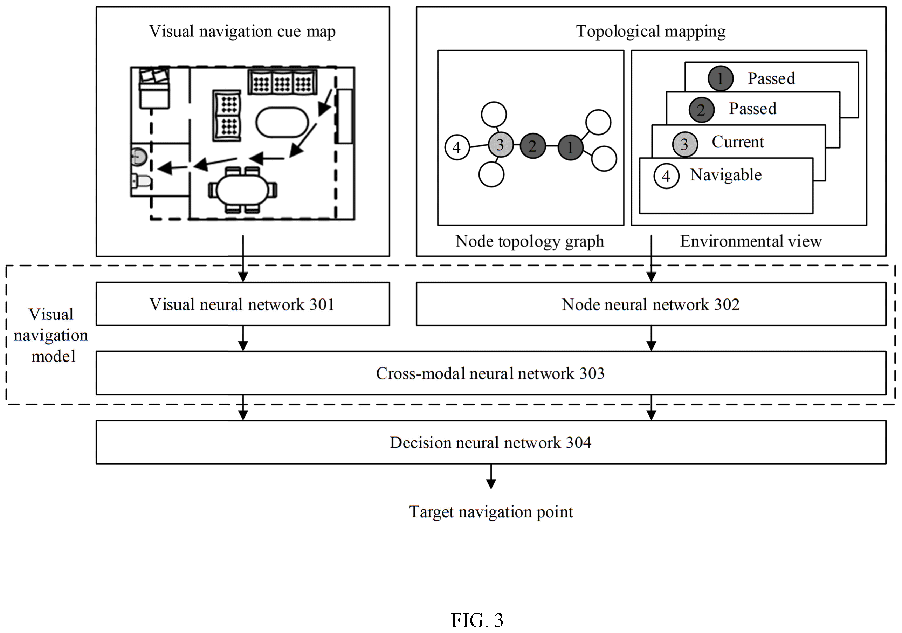

In some embodiments, in order to accurately complete the navigation task under the guidance of the visual navigation cues, the visual navigation model, as shown in FIG. 3, includes a visual neural network 301, a node neural network 302, a cross-modal neural network 303 and a decision neural network 304.

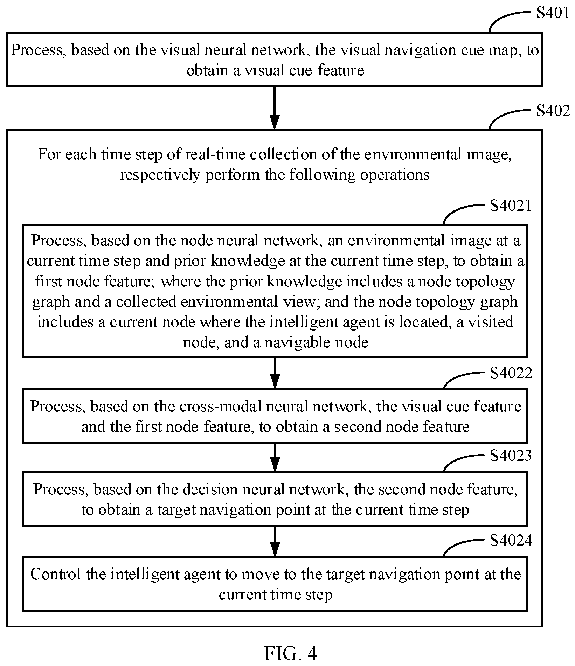

Matching, based on the visual navigation model, the real-time collected environmental image with the visual navigation cue map, to control the intelligent agent to move along the navigation path, as shown in FIG. 4, includes steps S401-S402, where S402 includes S4021-S4024, and may be specifically implemented as follows.

In S401, the visual navigation cue map is processed, based on the visual neural network, to obtain a visual cue feature.

The visual neural network is configured to extract a deep visual feature from the visual navigation cue map, and convert a pixel level image into a semantic level feature vector.

The visual neural network may adopt an encoder based on ViT-B/16 (Vision Transformer Base/16). The input is the visual navigation cue map, and the size of the visual navigation cue map may be adjusted to a size processable by the visual neural network, and exemplarily, the size of the visual navigation cue map may be 224×224 pixels. For multi-floor scenarios, for floor transitions caused by actions such as going upstairs or downstairs, an Order-Aware Floor Concatenation (OAFC) mechanism may be introduced to process the floor transitions.

During implementation, the visual cue map may be divided into fixed sized image patches, the fixed sized image patches are converted into a sequential embedding through linear projection, and position encodings are added to preserve the spatial information of each image patch, thereby obtaining a plurality of visual cue maps. For the i-th input visual cue map, a feature representation of the i-th input visual cue map is extracted to obtain a corresponding image patch feature; and a sequential embedding encoding the floor traversal order is superimposed to obtain a sub-feature of the i-th input visual cue map. In the case where sub-features of a plurality of input visual cue maps are extracted, fusion processing is performed on the sub-features of the plurality of input visual cue maps, to obtain a visual cue feature. Exemplarily, the fusion processing is summation, and the visual cue feature P is expressed as shown in Equation (1). $P = {\sum }_{i = 1}^{k} \left(ViT\left({P}_{i}\right)+{b}_{i}\right)$ (1)

Here, *Pᵢ* denotes the i-th input visual cue map, *bᵢ* denotes the sequential embedding encoding the floor traversal order, and k denotes the number of sub-features of the input visual cue maps.

In addition, the fusion processing may also be concatenation, weighted summation, and/or average pooling, etc.

In S402, for each time step of real-time collection of the environmental image, the followings are performed.

In S4021, an environmental image at a current time step and prior knowledge at the current time step are processed, based on the node neural network, to obtain a first node feature. The prior knowledge includes a node topology graph and a collected environmental view. The node topology graph includes a current node where the intelligent agent is located, a visited node, and a navigable node.

Here, in the node topology graph, a node represents a current position, a historical position and a navigable position reached by the intelligent agent, and an edge represents a relationship between positions. As shown in FIG. 3, the black node represents a visited node, the gray node represents a current node, and the white node represents a navigable node. The current node represents current position information of the intelligent agent, the visited node represents historical position information of the intelligent agent, and the navigable node represents navigable position information of the intelligent agent.

In some embodiments, processing, based on the node neural network, the environmental image at the current time step and the prior knowledge at the current time step to obtain the first node feature may be implemented as follows.

In step C1, the node topology graph is updated, based on the environmental image at the current time step, to obtain a node topology network at the current time step.

At each time step t, the node topology graph is *Gt =* {*Vt, Et* | *Vt* ⊆ *V, Et* ⊆ *E* }*,* where V*t* denotes the set of nodes at time step t, V*t* ⊆ V denotes hat all nodes in the current node topology graph belong to the universal set of nodes V, Et denotes the set of edges at time step t, and E*t* ⊆ E denotes that all edges in the current node topology graph belong to the universal set of edges E.

The node topology graph includes three types of nodes: a current node, a visited node, and a navigable node. The intelligent agent may access panoramic views (representing images captured by the intelligent agent rotating a full circle at the current position) of the current node and the visited node as well as a partial view of a navigable node observed from the current or previously visited position; and perform an update operation, to adding the current node V*t* and its unvisited adjacent node 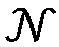 (*Vₜ*) into *V*_{*t*-1}, thereby updating the node topology graph.

In step C2, the environmental image at the current time step and environmental views of a plurality of nodes in the prior knowledge are inputted into the node neural network, to obtain the first node feature.

The node topology network extracts at least one of a step embedding feature, a position embedding feature, a temporal feature, a directional embedding feature or a navigability type embedding feature of each node. After extracting the aforementioned features, two branches may be used to respectively generate a contextual view representation and a node embedding, so as to construct the first node feature. The specific generation process will be described later, and will not be repeated here in the present disclosure.

In the embodiments of the present disclosure, the real-time update mechanism of the node topology graph enables the intelligent agent to continuously integrate new environmental information. This dynamic nature supports lifelong learning of the intelligent agent, such that the agent can continuously perceive the surrounding environment based on environmental images collected in real time during long-term operation, thereby improving the accuracy of navigation of the intelligent agent.

As set forth above, the first node feature includes a node embedding and/or a contextual view representation of a node.

Here, each node has a respective node embedding and contextual view representation. For each node, the node embedding of each node is a comprehensive vector representation that integrates a topological structure, a spatiotemporal attribute and visual information, and is used to characterize the overall state of the node in the environment.

For each node, the contextual view representation of each node is obtained by aggregating visual features from multi-view observations through a self-attention mechanism, and reflects the overall visual appearance of the node.

In the embodiments of the present disclosure, the node embedding is utilized to provide topological localization of a specific position, and the contextual view is utilized to provide visual confirmation of an appearance. The combination of the node embedding and the contextual view enables a comprehensive understanding of the node from a macro to a micro perspective, thereby improving the accuracy of navigation of the intelligent agent.

In some embodiments, in order to extract the node embedding in the first node feature, the node neural network includes a node feature extraction module and a first encoding module. Inputting the environmental image at the current time step and the environmental view of the plurality of nodes in the prior knowledge into the node neural network, to obtain the first node feature, may be implemented as follows.

In step D1, a step number embedding feature and a position embedding feature of the current node, and a visual feature set of each of a plurality of environmental views of the current node are extracted from the environmental image at the current time step and the environmental views of the plurality of nodes, based on the node feature extraction module.

Here, the step number embedding feature represents a feature mapping an access order of a node in the navigation sequence into a vector through a learnable embedding layer. For a navigable node, the step number embedding feature is set to a default value, and exemplarily, the step number embedding feature may be 0. In the case where the node is a current node or a visited node, the step number embedding feature may be implemented as an encoding feature for the actual accessed step number.

The position embedding feature is used to capture spatial distances and directions relative to other nodes.

The visual feature set represents visual features of each viewing angle at which the target scene is observed at each node. For the current node and the visited node, a panoramic view at the node is available, and the panoramic view may be adopted as the environmental view. Visual features from the respective angles may be extracted from the environmental view, and the visual features of the respective viewing angles may be averaged to obtain the visual feature set of the node. Since the visited node has been previously calculated as a current node, the visual feature set of the visited node has already been stored and may therefore be directly obtained.

However, for a navigable node, the intelligent agent may not have reached the navigable point, and thus a panoramic view is unavailable. Instead, a valid view (i.e., a view being able to observe the navigable node at another node) may be adopted as the environmental view, and visual features from a plurality of angles may be extracted from the valid view to obtain the visual feature set of the node.

In step D2, an encoding operation is performed on the visual feature set, the step number embedding feature and the position embedding feature, based on the first encoding module, to obtain the node embedding.

During implementation, the node embedding 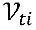 of the i-th node at time step t is as shown in Equation (2). ${V}_{ti} = {V}_{ti}^{s} + {V}_{ti}^{p} + \frac{1}{n} {\sum }_{j = 1}^{n} {W}_{ij}^{v}$ (2)

Here, 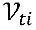 denotes the node embedding of the i-th node in 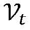 *=* ( 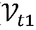 *,* 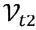 *,* ... , 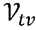 ) at time step t, 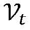 denotes the node embeddings of all nodes at time step t, ${V}_{ti}^{s}$ denotes the step number embedding feature of the i-th node at time step t, ${V}_{ti}^{p}$ denotes the position embedding feature of the i-th node at time step t, ${W}_{ij}^{v}$ denotes the visual feature of the j-th environmental view of the i-th node, and n denotes the total number of environmental views.

In the embodiments of the present disclosure, the node embedding fuses the step number embedding feature, the position embedding feature, and the temporal feature, thereby achieving multi-information aggregation and improving the expressive capability of the node embedding, thus improving path planning and control capabilities based on visual cues, and ultimately improving the precision of navigation.

In some embodiments, in order to extract the contextual view representation in the first node feature, the node neural network includes the node feature extraction module and a second encoding module. Inputting the environmental image at the current time step and the environmental views of the plurality of nodes in the prior knowledge into the node neural network, to obtain the first node feature, may be specifically implemented as follows.

In step E1, a directional embedding feature and a navigability type embedding feature of the current node are extracted from the environmental image at the current time step and the environmental views of the plurality of nodes, based on the node feature extraction module.

The directional embedding feature represents a viewing direction of the environmental view relative to the self-centeredness of the intelligent agent.

The navigability type embedding feature represents whether the environmental view has at least one adjacent passable node leading to a target navigation point.

In step E2, an encoding operation is performed on the directional embedding feature, the navigability type embedding feature and the visual feature set, based on the second encoding module, to obtain the contextual view representation of the node.

Here, the visual feature set has been explained above and will not be repeated in the embodiments of the present disclosure.

During implementation, the second encoding module may include a normalization layer and a self-attention mechanism layer. The directional embedding feature, the navigability type embedding feature, and the visual feature set of each view for each node are summed. A normalized feature of the view corresponding to the node is obtained by using a normalization layer. The normalized features of all views corresponding to the node are input into the self-attention mechanism layer, to obtain the contextual view representation of the node. The contextual view representation *Wᵢ* of the i-th node is expressed as shown in Equation (3). $\begin{matrix}{W}_{ij}^{′} = LN \left({W}_{ij}^{v}+{W}_{ij}^{d}+{W}_{ij}^{n}\right) \\ {W}_{i} = SelfAttn \left({W}_{i 1}^{′},{W}_{i 2}^{′},…,{W}_{in}^{′}\right)\end{matrix}$ (3)

Here, ${W}_{ij}^{v}$ denotes the visual feature of the j-th environmental view of the i-th node, ${W}_{ij}^{d}$ denotes the directional embedding feature of the j-th environmental view of the i-th node, ${W}_{ij}^{n}$ denotes the navigability type embedding feature of the j-th environmental view of the i-th node, LN denotes a normalization layer, and SelfAttn denotes a self-attention mechanism layer.

In the embodiments of the present disclosure, the directional embedding can be used to distinguish the semantics of different orientations at the same position (e.g., the east-west direction of a corridor), and the navigability embedding can be used to distinguish node types. By encoding the combination of the directional embedding and the navigability embedding together with the visual feature set, the obtained contextual view representation retains more visual details, and such information can improve the planning precision of the navigation path based on visual cues, thereby improving the precision of navigation.

In S4022, the visual cue feature and the first node feature are processed, based on the cross-modal neural network, to obtain a second node feature.

In some embodiments, the second node feature includes a first node sub-features and/or a second node sub-feature. The first node sub-feature is used for perceiving a global action in the node topology graph at the current time step. The second node sub-feature is used for perceiving a local action at the current time step.

In some embodiments, the first node sub-feature may be used to perceive a global action, so as to determine a next navigation point in the global action sequence. To improve control precision, on the basis of the first node sub-feature, the second node sub-feature may be added to enhance the local perception and decision-making capability of the current node.

In the embodiments of the present disclosure, the global feature provides a contextual constraint and overall structural information, which can effectively suppress interference from local noise. The local feature provides precise detailed information, which can supplement subtle changes that may be overlooked by the global feature. The cooperation of the global feature and the local feature improve the accuracy of the navigation point subsequently obtained based on the second node feature.

In some embodiments, processing, based on the cross-modal neural network, the visual cue feature and the first node feature, to obtain the second node feature, may be implemented as: inputting the node embedding and the visual cue feature into a first cross-modal encoder of the cross-modal neural network, to obtain the first node sub-feature.

After obtaining the visual cue feature P and the node embedding *Vₜ,* the visual cue feature P and the node embeddings *Vₜ* are input into the cross-modal neural network. Specifically, the first cross-modal encoder of the cross-modal neural network contains a plurality of cross-modal graph transformer layers and one Global Axial Self-Attention (GASA) layer. Each cross-modal graph transformer layer contains one cross-attention layer, the cross-attention layer is used for modeling the relationship between the visual cue feature P and the node embedding *Vₜ.* The global axial self-attention layer simultaneously considers visual similarity and spatial distance among nodes. The visual cue feature P and the node embedding *Vₜ* are input into the plurality of cross-modal graph transformer layers to obtain an intermediate sub-feature, and the intermediate sub-feature is input into the global axial self-attention layer to obtain the first node sub-feature GASA(X), as shown in Equation (4). $\begin{matrix}X = CrossAttn \left({V}_{t}, P\right) \\ GASA \left(X\right) = Softmax \left(\frac{{XW}_{q} {\left({XW}_{k}\right)}^{T}}{\sqrt{d}}+{EW}_{d}\right) {XW}_{v}\end{matrix}$ (4)

Here, CrossAttn denotes the cross-attention layer, 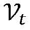 denotes the node embedding, *P* denotes the visual cue feature, *X* denotes the stack of all node embeddings refined by cross-attention, *W_{q}, Wₖ, W_{d}, Wᵥ* denotes a learnable matrix, *E* denotes a pairwise distance matrix obtained from *Eₜ,* and *Eₜ* denotes the edge set at the current time step t.

During implementation, a stop node is added for selecting the next action. The first node sub-feature may be formalized in the form of a node representation as: *v̂* = (stop, *nav*₁, *nav*₂, ... , *navᵥ*)*.* Here, v denotes the total number of nodes in *Vₜ.*

In the embodiments of the present disclosure, the visual cue feature and the node embedding are fused through the first cross-modal encoder, so as to achieve global guidance of the graph neural network by the visual cue feature. The node embedding has already compressed complex graph topology information into a compact vector representation, and the visual cue feature has also been preprocessed to extract key visual information regarding the navigation path constraint. The interaction between the visual cue feature and the node embedding takes place in a relatively low-dimensional space, thereby reducing unnecessary computational overhead, and enabling the learning and extraction of key information for action decision-making therefrom. The visual cue feature, as prior knowledge, can provide the scene-level semantic constraint for the first node sub-feature, so as to improve the accuracy of subsequent navigation.

In some embodiments, processing, based on the cross-modal neural network, the visual cue feature and the first node feature, to obtain the second node feature at the current time step, may be implemented as: inputting the contextual view representation and the visual cue feature into a second cross-modal encoder of the cross-modal neural network, to obtain the second node sub-feature.

Here, the second cross-modal encoder may be a standard 4-layer cross-modal transformer model, and the standard 4-layer cross-modal transformer model is used to model the relationship between the contextual view representation and the visual cue feature, to obtain the second node sub-feature ${W}_{i}^{′}$.

In the embodiments of the present disclosure, the contextual view representation is a node representation that contains temporal context information and local neighborhood information. The contextual view representation not only contains the state at the current time step, but also fuses information from the historical time step and local structural information around the node. The visual cue feature provides path guidance information from the visual modality. The contextual view representation and the visual cue feature is processed by the second cross-modal encoder to output the second node sub-feature. This second node sub-feature fuses temporal context information, local neighborhood information, and visual guidance information, forming a feature representation with local action perception capability, which can accurately reflect action details of a specific node or local region, thereby improving the precision of navigation.

In S4023, the second node feature is processed, based on the decision neural network, to obtain a target navigation point at the current time step.

Here, the target navigation point represents the optimal navigation position selected according to the environmental state and the task goal at the current time step, and is the target position for the next movement or operation of the intelligent agent. When the intelligent agent has reached the end of the navigation path, the target navigation point is represented by stop to indicate the end of navigation.

In some embodiments, processing, based on the decision neural network, the second node feature, to obtain the target navigation point at the current time step, may be implemented as: in a case of the second node feature includes the first node sub-feature, inputting the first node sub-feature into the decision neural network, to obtain prediction scores for respective global navigation nodes; and seeking a navigation node with a prediction score that satisfies a target condition as the target navigation point.

During implementation, the decision neural network may be a two-layer feedforward network, and the prediction score ${s}_{i}^{g}$ of the i-th navigation node is as shown in Equation (5). ${s}_{i}^{g} = FFN \left({\hat{v}}_{i}\right)$ (5)

Here, *v̂ᵢ* denotes the first node sub-feature of the i-th navigation node, and FFN denotes a feedforward network.

The target condition may be that the prediction score is greater than a score threshold, or that the prediction scores are ranked in descending order and the top-ranked score is selected.

In the embodiments of the present disclosure, since the first node sub-feature has global action perception capability, and is able to comprehensively consider the overall layout of the scene and the position of the task goal and score all candidate nodes based on the first node sub-feature, the final target navigation point has optimality within a global scale.

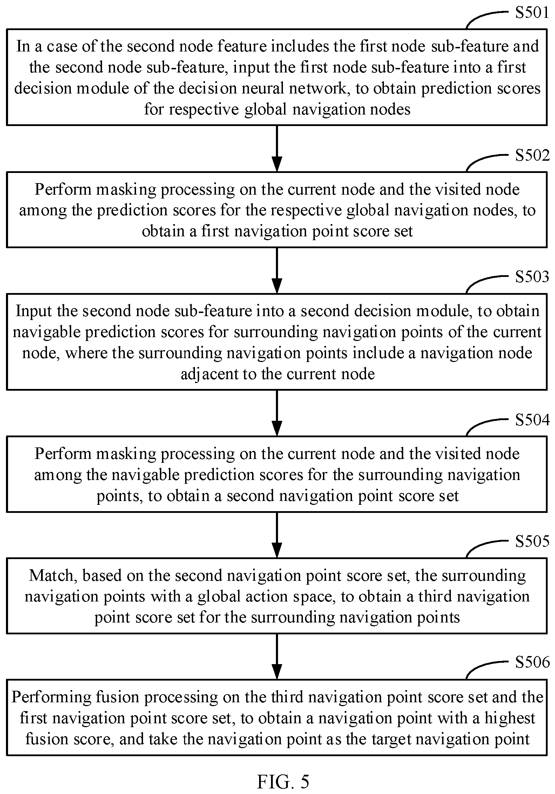

In some embodiments, as shown in FIG. 5, processing, based on the decision neural network, the second node feature, to obtain the target navigation point at the current time step, includes the followings.

In S501, in a case of the second node feature includes the first node sub-feature and the second node sub-feature, the first node sub-feature is inputted into a first decision module of the decision neural network, to obtain prediction scores for respective global navigation nodes.

During implementation, the first decision module is the aforementioned two-layer feedforward network, to obtain prediction scores ${s}_{i}^{g}$ for the respective global navigation nodes.

In S502, masking processing is performed on the current node and the visited node among the prediction scores for the respective global navigation nodes, to obtain a first navigation point score set.

Since the current node and the visited node have already been visited, in order to avoid repeated visits, it is necessary to perform masking processing on the scores of the visited node and the current node, to obtain the first navigation point score set ${s}_{i}^{g ′}$*,* the first navigation point score set ${s}_{i}^{g ′}$*,* includes navigable nodes.

Exemplarily, the scores of the current node and the visited node may be set to invalid to preserve the scores of the navigable nodes. The scores of the current node and the visited node are invalid.

In S503, the second node sub-feature is inputted into a second decision module, to obtain navigable prediction scores for surrounding navigation points of the current node. The surrounding navigation points includes a navigation point adjacent to the current node.

The second decision module may be a fully connected network. Each second node sub-feature is input into the fully connected network to obtain navigable prediction scores for surrounding navigation points of the current node.

It should be noted that the navigation nodes may also include a stop node, for the stop node, a separate score needs to be set as a prediction score.

In S504, masking processing is performed on the current node and the visited node among the navigable prediction scores for the surrounding navigation points, to obtain a second navigation point score set.

In order to avoid repeated visits to the current node and the visited node, so as to mitigate the impact of unseen views.

During implementation, in order to improve the precision of local action prediction according to the visual navigation cue, performing masking processing on the current node and the visited node among the navigable prediction scores for the surrounding navigation points, to obtain a second navigation point score set, may be implemented as follows.

In step F1, a current navigation stage is determined based on navigation progress.

Here, the navigation progress includes a ratio of the number of steps taken to the total path length, or a ratio of the traveled path to the navigation path. The current navigation stage may be determined according to the navigation progress and a corresponding threshold.

In addition, a direction deviation rate may also be introduced to determine the navigation stage. The direction deviation rate indicates the degree of deviation from a preset path. The navigation stage may be determined by processing the navigation progress and the direction deviation rate through a decision tree.

The navigation stage may be divided based on actual conditions. Exemplarily, the navigation process is divided into three navigation stages, and the three navigation stages include: a pre-guidance stage (low progress, small deviation), a refinement stage (moderate progress, tolerable deviation), and an approach stage (high progress, requiring precise alignment).

Different navigation stages have different requirements for exploration strategies: in the initial stage (pre-guidance stage), the intelligent agent needs to move quickly toward the target; in the middle stage (refinement stage), the intelligent agent may need to detour around obstacles; and in the later stage (approach stage), precise positioning is required.

In step F2, a visual center region corresponding to the navigation stage is determined in the visual navigation cue map.

The visual center region defines a range of interest of the navigation intention of the current navigation stage in the navigation path. In the case where the target is far away, only the general direction of the target itself needs to be focused on; and as the target is approached, more fine-grained local visual information is required to identify a specific entrance or obstacles.

During implementation, the navigation path may be divided according to the navigation stages, and an image region corresponding to the current navigation node may be cropped from the visual navigation cue map to obtain an initial range. The initial range may be processed by a ViT encoder to obtain an initial feature. Through an attention mechanism, cross-learning is performed between the initial feature and the node embedding of the current node, so as to obtain a target feature of the visual center region. The target feature is mapped back to the initial range to obtain a visual center position. A radius is determined based on the current navigation stage, and one target region is cropped from the visual navigation cue map, with the visual center position as the center and combined with the radius, so as to obtain the visual center region of interest for the current navigation stage.

In step F3, a mask matrix is generated based on a visual feature of the visual center region.

In a possible implementation, the similarity between the visual feature of the visual center region and the embedding features of the surrounding navigable points may be calculated to generate a mask matrix.

In other embodiments, in order to improve the accuracy of constraining the navigation path by the visual navigation cue, the mask matrix may be determined in a plurality of manners. In the embodiments, the mask matrix may include at least two of a first mask matrix, a second mask matrix or a third mask matrix.

During implementation, generating a first mask matrix based on the visual feature of the visual center region may be implemented as: extracting, based on a visual encoder (which may be the same as the aforementioned visual neural network), a patch feature of each image patch in the visual navigation cue map; determining a similarity between each patch feature and the visual feature of the visual center region; in the case where the similarity between the image patch and the visual center region is higher than a similarity threshold, assigning a first initial weight to a node corresponding to the image patch (the first initial weight being a higher weight, and exemplarily, the first initial weight being 1); and in the case where the same navigation node corresponds to a plurality of image patches, performing a weighted summation on the first initial weights of the plurality of image patches, to obtain a first weight for the navigation node. For any image patch, in the case where the similarity corresponding to the image patch is not higher than the similarity threshold, a second initial weight is assigned (the second initial weight is a lower weight, and exemplarily, the second initial weight may be 0 or a small decay value); and in the case where the same navigation node corresponds to a plurality of image patches, a weighted summation is performed on the second initial weights of the plurality of image patches, to obtain a second weight for the navigation node. The weight for each navigation node (i.e., the first weight or the second weight) collectively forms the first mask matrix.

The first mask matrix obtained by using visual similarity enables nodes to be visually correlated with the target, thereby reducing the misleading problem caused by target-irrelevant objects.

The second mask matrix may dynamically adjust the masking range according to the path stage, and is mainly implemented through a dynamic masking strategy in combination with an image patch spatial mapping mechanism. This may be implemented as: using the spatial position embeddings of nodes in the node topology graph to map each node to the image patch positions in the visual cue map, to obtain image patch features of the plurality of image patches corresponding to the node in the visual cue features; calculating a distance (e.g., Manhattan distance or Euclidean distance) between the coordinates of the image patch features corresponding to each node and the coordinate corresponding to a core feature in the visual features of the visual center region. In the case where the distance is smaller than the radius of the current navigation stage, the candidate node is set to a first weight; and in the case where the distance is not smaller than the radius of the current navigation stage, the candidate node is set to a second weight, thereby obtaining the second mask matrix for the surrounding navigable point.

During implementation, the radii for different navigation stages may take different values. For example, the radius for a navigation node farther from the navigation destination is smaller, so as to control the attention range of the model at different navigation stages by enlarging or shrinking the masking region.

The third mask matrix may be determined in combination with the actual path progress. This may be implemented as: for each navigation point among the surrounding navigation points, inputting the image patch features in the visual navigation prompt map corresponding to the navigation point into a weight neural network, to obtain a distance weight (where a shorter distance yields a higher weight) and a direction weight (where a direction closer to the target direction yields a higher weight) between the image patch features and the core feature of the visual center region calculated by the weight neural network; acquiring path progress of the current path, to dynamically adjust, based on the path progress, the coefficient for the distance weight and the coefficient for the direction weight; and performing, based on the coefficient for the distance weight and the coefficient for the direction weight, a weighted summation on the distance weight and the direction weight, to obtain the mask for the navigation point, and thereby obtaining the third mask matrix.

During implementation, dynamically adjusting the mask values based on the navigation nodes may be implemented as follows.
1) Initial stage: The requirement is to quickly initiate movement toward the target direction to avoid lingering in place.

In this stage, the coefficient for the direction weight may be set to be greater than the coefficient for the distance weight. The weights for visual similarity and navigability between the navigation point and the visual center region may remain inactive.

2) Intermediate stage: The requirement is to maintain the general direction while allowing path diversity to avoid local optima.

In this stage, the coefficient for the direction weight may be appropriately reduced (the closer to the final stage, the lower the coefficient for the direction weight) until the coefficient for the direction equals the coefficient for the distance weight. Simultaneously, the coefficient for the distance weight is gradually increased (the closer to the final stage, the higher the coefficient for the distance weight).

Additionally, a deviation tolerance mechanism may be introduced. In the case where the directional deviation is less than a deviation threshold, nodes within the threshold are scored normally, whereas the direction weights of nodes outside the threshold need to be penalized with a step size to reduce the contribution of the direction weights.

3) Final stage: The requirement is to achieve fine alignment with the target, prioritizing visual confirmation and reachability.

In terms of weight setting, the coefficient for the direction weight may be further reduced, and the coefficient for the distance weight may also be reduced; meanwhile, the proportions of the visual similarity coefficient and the navigability coefficient may be increased.

During implementation, the mask matrix may adopt any two of the above three mask matrices. Alternatively, a weighted sum or an average of the first mask matrix, the second mask matrix and the third mask matrix may be calculated.

In step F4, the masking processing is performed on the current node and the visited node among the navigable prediction scores for the surrounding navigation points, based on the mask matrix, to obtain the second navigation point score set.

In the embodiments of the present disclosure, by dividing the navigation stages, the subsequent mask can dynamically adjust the range of attention, so that the behavior of the visual navigation model is constrained by the temporal navigation cues, and human navigation intuition is simulated, to reduce inefficiency or failure caused by a "one-size-fits-all" strategy. Based on the visual center region, the visual navigation model can acquire sufficient visual details at appropriate times, thereby enabling the generated mask matrix to obtain more detailed information. Masking processing is then performed on the current node and the visited nodes based on the mask matrix, so as to achieve filtering of unseen views.

In S505, the surrounding navigation points are matched with a global action space, based on the second navigation point score set, to obtain a third navigation point score set for the surrounding navigation points.

Since the local action space is different from the global space that considers all navigable nodes in *Vₜ*, the local action score ${s}_{i}^{l}$ need to be transformed to match the global action space. This may be achieved by adding a backtracking score *s_{b},* and the third navigation point score set ${s}_{i}^{l ′}$ is as shown in Equation (6). ${s}_{i}^{l ′} = \left\{\begin{matrix}{s}_{b} , & if {V}_{i} ∈ {V}_{t} - N \left({V}_{t}\right) , \\ {s}_{i}^{l} , & otherwise .\end{matrix}\right.$ (6)

Here, the backtracking score is the sum of the scores of visited nodes in 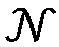 (*Vᵢ*), where 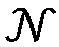 (*Vᵢ*) denotes an adjacent node connected to the current node.

In S506, fusion processing is performed on the third navigation point score set and the first navigation point score set, to obtain a navigation point with a highest fusion score, and take the navigation point as the target navigation point.

During implementation, the fusion score *sᵢ* of the i-th node is as shown in Equation (7): ${s}_{i} = {σ}_{t} {s}_{i}^{g ′} + \left(1-{σ}_{t}\right) {s}_{i}^{l ′}$ (7)

Here, ${s}_{i}^{g ′}$ denotes the first navigation point score set, ${s}_{i}^{l ′}$ denotes the third navigation point score set, and *σₜ* denotes a learnable fusion scalar.

In the embodiments of the present disclosure, by using masking processing to forcibly exclude the current node and the visited nodes, the intelligent agent are effectively prevented from lingering at the locally optimal position or repeatedly visiting historical positions, so that the intelligent agent continuously advances toward new regions, thereby improving task completion efficiency. The first decision module grasps the overall direction based on the global feature, and the second decision module optimizes immediate choices based on the local feature. The decision made by fusing the two will neither blindly pursue the global optimum while neglecting local obstacles, nor fall into local greed while deviating from the overall goal, thereby improving the accuracy of the target navigation point.

In S4024, the intelligent agent is controlled to move to the target navigation point at the current time step.

During implementation, the intelligent agent performs an action to reach the target navigation point. In a discrete environment, the action is a teleportation; in a continuous environment, the action is low-level control (turning + advancing). After reaching the target navigation point, the operations of the next time step are repeated, the target navigation point is taken as the current node, and steps S4021 to S4024 are performed.

In the embodiments of the present disclosure, the visual cue features remain unchanged during subsequent navigation, without the need for repeated computation, which can significantly reduce inference overhead. In addition, navigation is a temporal decision-making process, and environmental awareness needs to be updated dynamically. A static map cannot adapt to changing scenes, while a full map reconstruction is computationally expensive. The node topology graph abstracts key locations as nodes, significantly compressing the state space, thereby enabling real-time inference in large-scale scenarios. On the other hand, the second node feature is constructed using the visual cue feature that represents the global feature and the first node feature represents the local feature, integrating overall and detailed features to improve the accuracy of the ultimately obtained target navigation point.

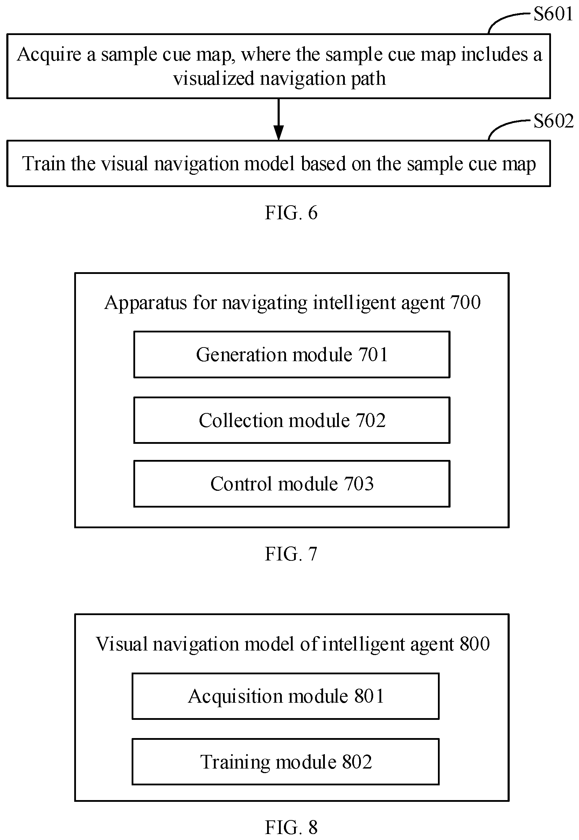

Based on the same technical concept, the embodiments of the present disclosure further propose a method for training a visual navigation model of an intelligent agent. As shown in FIG. 6, the method includes the followings.

In S601, a sample cue map is acquired, where the sample cue map includes a visualized navigation path.

The sample cue map is a data sample used for training, includes a visualized navigation path, and is the learning target of the visual navigation model.

In S602, the visual navigation model is trained based on the sample cue map.

During implementation, the sample cue map is input into the visual navigation model to obtain predicted navigation behavior. A difference between the predicted navigation behavior and the visualized navigation path is calculated, and model parameters of the visual navigation model are optimized through backpropagation.

In the embodiments of the present disclosure, the sample cue map is used for supervised training, so as to reduce a large amount of trial-and-error exploration in reinforcement learning. In addition, the optimization objective of supervised learning is clear and fixed, and the gradient direction is stable and predictable, thereby reducing common training instability issues in reinforcement learning, such as policy collapse, gradient vanishing caused by sparse rewards, and/or difficulties in balancing exploration and utilization, etc. By using the visualized navigation path in the sample cue map as visual guidance, the visual navigation model can complete the planning and training of navigation paths based on displayed temporal guidance.

In some embodiments, acquiring the sample cue map may be implemented as follows.

In step G1, a sample space in a target sample set is mapped into a spatial image sample, to obtain layout information of the sample space.

The spatial image sample represents the projection or rendering of a three-dimensional sample space into a two-dimensional image to preserve spatial layout information.

The layout information represents geometric and semantic information such as traversable areas, obstacles, and/or room structures, etc. in the scene.

In step G2, a sample path of the target sample set is mapped onto the spatial image sample, to generate the sample cue map.

During implementation, mapping a sample path of the target sample set onto the spatial image sample, to generate the sample cue map, may be implemented as: in response to a plurality of path key points drawn on a visual image of a target scene, performing line connection on the plurality of path key points sequentially in chronological order, to obtain a sample path; mapping the sample path into the spatial image sample, to obtain a sample mapped image; and cropping a local region containing the sample path from the sample mapped image, to obtain the sample cue map.

In some embodiments, in order to enrich the training samples, the visual-language navigation dataset (Room-to-Room (R2R) and/or Room-to-Room in Continuous Environments (R2R-CE)) in related task is transformed into a visual-prompt navigation dataset (i.e., a sample cue map) (Room-to-Room with Vision-and-Path (R2R-VP) and/or Room-to-Room in Continuous Environments with Vision-and-Path (R2R-CE-VP)). Specifically, a two-dimensional top-view map is reconstructed based on Matterport3D (Matterport 3D Dataset) and HM3D (Habitat-Matterport 3D Research Dataset) scene, and viewpoints in the original navigation trajectory are mapped into the top-view coordinate space, to obtain path key points; line connection is performed on the plurality of path key points sequentially in chronological order, to obtain a sample path; the sample path is mapped into the spatial image sample, to obtain a sample mapped image; and a local region containing the sample path is cropped from the sample mapped image, to obtain the sample cue map. On this basis, in-domain and out-of-domain trajectories from the PREVALENT (Pre-training and Representation for Visual-Language Navigation) and ScaleVLN (Scale Vision-and-Language Navigation) datasets may be additionally introduced for unified transformation and integration, which can effectively expand the diversity and coverage of the training data and improve the generalization capability of the model in cross-scene and cross-domain environments.

In the embodiments of the present disclosure, the sample paths in the target sample set are mapped to achieve a standardized representation of the samples, i.e., converting data from different sources into a unified format, thereby facilitating batch training and model generalization.

The presentation form of the navigation path in the sample cue map is consistent with that in the aforementioned inference process, and will not be repeated here.

In some embodiments, the visual navigation model includes a visual neural network, a node neural network, a cross-modal neural network and a decision neural network.

The visual neural network is used to extract a visual cue feature of the sample cue map.

The node neural network is used to extract a first node feature in a node topology graph, and the node topology graph is established based on a real-time surrounding environment image of the intelligent agent in a sample space.

The cross-modal neural network is used to process the visual cue feature and the first node feature, to obtain a second node feature.

The decision neural network processes the second node feature, to obtain a target navigation point at each time step. The structure of the visual neural network has been explained above, and will not be repeated here.

During the training process, the visual navigation model may optimize model parameters with reference to contrastive learning, which may be specifically implemented as follows.

In step H1, contrastive learning is performed on the first node feature and the visual cue feature, to obtain a contrastive learning loss.

During implementation, the feature representation of the same position point in the first node feature and the visual cue feature based on contrastive learning may be pulled closer, so as to reduce the distance in the representation space between the visual cue diagram and the corresponding node embedding the topology diagram. This loss term encourages the model to make the image patch in the visual cue map that correspond to a certain topology graph node (e.g., one navigable node) as close as possible in the feature space to the embedding representation of the node. The first contrastive learning loss *L*ᵥₚ for pulling closer the same position point is as shown in Equation (8). ${L}_{vp} = - \frac{1}{t} {\sum }_{{I}_{{vp}_{i}} ∈ {V}_{α}} log \frac{{e}^{cos \left({vp}_{i}, {top}_{{I}_{{vp}_{i}}}\right)}}{{\sum }_{u = 1}^{t} {e}^{cos \left({vp}_{i}, {top}_{u}\right)}}$ (8)

Here, t denotes the number of all nodes in the topology graph, *Vₐ* is the index set of points in the topology graph corresponding to the position of the image patch features *vpᵢ* in the visual cue map (i.e., which patches *vpᵢ* correspond to points in the topology graph), cos(,) denotes cosine similarity, *I_{vpᵢ}* denotes the index of the image patch feature *vpᵢ,* ${top}_{{I}_{{vp}_{i}}}$ denotes the node embedding corresponding to the position of the image patch feature *vpᵢ; I_{topᵤ}* denotes the index of the point *topᵤ* in the topology graph, and ${vp}_{{I}_{{top}_{u}}}$ denotes the image patch feature corresponding to the position of the node embedding *topᵤ.*

During implementation, the feature representation of the different position points in the first node feature and the visual cue feature based on contrastive learning may be pushed apart, so as to increase the distance between the embedding representations of irrelevant nodes in the topology graph and the corresponding patches in the visual cue map. This loss term forces the model to separate irrelevant nodes in the topology graph from non-corresponding patches in the visual cue map, so as to avoid confusion. The second contrastive learning loss *L*ₜₒₚ for pushing apart different position points is as shown in Equation (9). ${L}_{top} = - \frac{1}{t} {\sum }_{u = 1}^{t} log \frac{{e}^{cos \left({top}_{u}, {vp}_{{I}_{{top}_{u}}}\right)}}{{\sum }_{i = 1}^{m} {e}^{cos \left({top}_{u}, {vp}_{i}\right)}}$ (9)

Here, the parameters in this equation have been described above and will not be repeated in the present disclosure.

In practice, *Lᵥₚ* and *Lₜₒₚ* may be trained separately, or may be fused into one total loss and jointly trained. The total loss 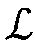 is as shown in Equation (10). $L = \frac{1}{\left|V\right|} {\sum }_{i ∈ V} {L}_{vp} \left({x}_{i}, {h}_{p \left(i\right)}\right) + \frac{1}{\left|T\right|} {\sum }_{j ∈ T} {L}_{top} \left({h}_{j}, {x}_{p \left(j\right)}\right)$ (10)

Here, *V* is the set of all patch indices in the visual cue map, p(i) denotes the topology node corresponding to patch *i*, and 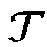 is the set of all node indices in the topology graph.

In step H2, a path loss is determined based on a sample path of the sample cue map and a predicted path, where the predicted path is obtained from a target navigation point at each time step predicted by the visual navigation model.

In one embodiment, uniform sampling is performed on the predicted path to obtain a predicted feature; uniform sampling is performed on the sample path to obtain a sample feature; and a difference between the predicted feature and the sample feature is calculated to obtain the path loss.

In another embodiment, uniform sampling is performed on the predicted path and uniform sampling is performed on the sample path, with the same number of samples and intervals, to obtain a predicted sampling point set and a sample sampling point set. For each predicted sampling point and each sample sampling point in the predicted sampling point set and the sample sampling point set, differences are sequentially calculated, and then an average of the differences is computed to obtain the path loss.

In step H3, a model parameter of the visual navigation model is optimized based on the contrastive learning loss and the path loss.

A target loss is determined based on a sum of the contrastive learning loss and the path loss. In the case where the target loss satisfies a convergence condition, the model parameter optimization of the visual navigation model is determined to be completed; and in the case where the target loss does not satisfy the convergence condition, the model parameter of the visual navigation model is continuously optimized until the convergence condition is satisfied.

Here, the convergence condition is that the target loss is less than a loss threshold or that a number of iterations is reached.

In the embodiments of the present disclosure, the contrastive learning loss operates at the global feature level, focusing on the similarity between the overall cue map or node embeddings, thereby reinforcing high-level semantic understanding. The path loss operates at the local decision-making level, focusing on the specific choices at each time step, thereby reinforcing fine-grained action control. The combination of the contrastive learning loss and the path loss enables the visual navigation model to have both global planning capability and local execution capability, so as to adapt to navigation requirements at different granularities.

At the training and optimization level, the embodiments of the present disclosure may combine Behavioral Cloning and DAgger (Dataset Aggregation) strategies for joint training, so as to mitigate the performance degradation caused by distribution mismatch between training and testing phases in traditional imitation learning. Specifically, Behavioral Cloning is responsible for providing "basic commonsense knowledge", while DAgger is responsible for operating through a "trial-and-error with correction" mechanism. Behavioral Cloning and DAgger are trained alternately, allowing the visual navigation model to learn how to handle various complex situations it may encounter, thereby effectively improving the robustness and generalization capability of the model. Meanwhile, two types of data augmentation methods are proposed: trajectory-level and view-level augmentation. Trajectory-level augmentation refers to combining in-domain trajectory and out-of-domain trajectory to increase the number of trajectories. View-level augmentation is reflected in a plurality of views of the intelligent agent, each of the plurality of views may be trained independently. View-level augmentation may include augmentation by rotating the sample cue map, and may also include augmentation by randomly rotating the initial view of the intelligent agent. Through trajectory augmentation and view augmentation, the adaptability of the model to different path distributions, different initial orientations of the intelligent agent, and different directions of the visual cue map can be further improved. The above training strategies and data augmentation mechanisms work together, enabling the visual navigation model trained according to the solution of the present disclosure to have stronger generalization capability and practical deployability in complex, continuous, and unknown environments.

In summary, the method for navigating an intelligent agent provided by the embodiments of the present disclosure may offer the following advantages.
1. Significantly lowering the user interaction threshold, and improving product usability and user experience:
   Compared with navigation products that rely on natural language instructions or target image inputs, the present disclosure introduces visual prompts based on a top-view map of the scene as the sole form of navigation instruction. This allows users to accurately express navigation intentions through intuitive annotation without the need for professional navigation or language expression skills. This approach effectively avoids comprehension deviations caused by natural language ambiguity and complex descriptions, reduces the cognitive burden on ordinary users in actual use, and significantly improves product usability and user satisfaction in scenarios such as home services, and/or public services, etc.
2. Enhancing controllability and stability of the navigation process, and improving execution reliability in complex environments:
   Compared with image goal navigation solutions that merely define the destination, the visual prompting adopted by the present disclosure can simultaneously convey the overall path structure, key intermediate nodes, and travel direction constraints, providing clear global guidance information for the navigation process. In combination with the global-local joint decision-making mechanism proposed herein, the robot can maintain path consistency while flexibly adjusting according to local environmental changes during navigation tasks, thereby exhibiting higher navigation stability and robustness in complex, dynamic, or occluded environments, and effectively reducing the navigation failure rate.
3. Enhancing environmental generalization capability of the product, and reducing cross-scenario deployment costs:
   The present disclosure does not rely on scenario-specific language data or high-precision online environmental modeling. Instead, the present disclosure performs navigation decisions based on reusable scene top-view maps and visual prompts, enabling the same navigation model to be quickly deployed and used across different indoor environments. Compared with traditional solutions that require retraining or fine-grained modeling, the present disclosure significantly reduces the adaptation cost and deployment cycle of the product in new environments, thereby improving the scalability and large-scale deploy ability of the product in commercial applications.
4. Reducing system maintenance and long-term operation costs, and improving engineering feasibility of the product:
   In application scenarios requiring long-term operation, such as inspection and maintenance, the present disclosure supports storing and reusing visual prompts as task templates, avoiding the need for frequent re-configuration of navigation goals or re-collection of target images. Even when local environmental changes occur, the system can still rely on real-time visual perception and visual prompts for autonomous adjustment, thereby reducing manual intervention and maintenance frequency, and lowering long-term operation and maintenance costs of the overall system.
5. Forming a differentiated human-robot interaction and a navigation technology route, and enhancing product competitive advantages:
   Compared with navigation products currently on the market that primarily rely on voice commands, text instructions or target images, the present disclosure provides a novel human-robot interaction and navigation technology route with visual prompts as the core, combining intuitiveness, precision, and controllability. This differentiated solution can not only effectively compensate for the shortcomings of existing technologies in expressing complex spatial intentions, but can also serve as a core technical highlight of the product, enhancing the technological barrier and market competitiveness of the product among similar competing products.

Based on the same technical concept, the embodiments of the present disclosure further provide an apparatus 700 for navigating an intelligent agent, as shown in FIG. 7, including:
a generation module 701 configured to, in response to a navigation path drawn on a visual image of a target scene, generate a visual navigation cue map;
a collection module 702 configured to collect an environmental image of the intelligent agent in real time; and
a control module 703 configured to match, based on a visual navigation model, a real-time collected environmental image with the visual navigation cue map, to control the intelligent agent to move along the navigation path.

In some embodiments, the navigation path includes a plurality of path key points, and the generation module includes:
a generation unit configured to perform line connection on the plurality of path key points sequentially in chronological order, and generate visual indication information pointing to a next path key point; and
an acquisition unit configured to adding a connecting line with the visual indication information into the visual image, to obtain the visual navigation cue map.

In some embodiments, the connecting line includes a straight-line segment.

In some embodiments, the visual indication information includes an arrow.

In some embodiments, the visual navigation model includes a visual neural network, a node neural network, a cross-modal neural network and a decision neural network; and
the control module includes:
a first processing unit configured to process, based on the visual neural network, the visual navigation cue map, to obtain a visual cue feature; and
a second processing unit configured to, for each time step of real-time collection of the environmental image, perform:
processing, based on the node neural network, an environmental image at a current time step and prior knowledge at the current time step, to obtain a first node feature; where the prior knowledge includes a node topology graph and a collected environmental view; and the node topology graph includes a current node where the intelligent agent is located, a visited node, and a navigable node;
processing, based on the cross-modal neural network, the visual cue feature and the first node feature, to obtain a second node feature;
processing, based on the decision neural network, the second node feature, to obtain a target navigation point at the current time step; and
controlling the intelligent agent to move to the target navigation point at the current time step.

In some embodiments, the second processing unit is specifically configured to:
updating, based on the environmental image at the current time step, the node topology graph, to obtain a node topology network at the current time step; and
inputting the environmental image at the current time step and environmental views of a plurality of nodes in the prior knowledge into the node neural network, to obtain the first node feature.

In some embodiments, the first node feature includes a node embedding and/or a contextual view representation of a node.

In some embodiments, the node neural network includes a node feature extraction module and a first encoding module, and the second processing unit is specifically configured to:
extract, based on the node feature extraction module, from the environmental image at the current time step and the environmental views of the plurality of nodes, a step number embedding feature and a position embedding feature of the current node, and a visual feature set of each of a plurality of environmental views of the current node; and
perform, based on the first encoding module, an encoding operation on the visual feature set, the step number embedding feature and the position embedding feature, to obtain the node embedding.

In some embodiments, the node neural network includes the node feature extraction module and a second encoding module, and the second processing unit is specifically configured to:
extract, based on the node feature extraction module, from the environmental image at the current time step and the environmental views of the plurality of nodes, a directional embedding feature and a navigability type embedding feature of the current node; and
perform, based on the second encoding module, an encoding operation on the directional embedding feature, the navigability type embedding feature and the visual feature set, to obtain the contextual view representation of the node.

In some embodiments, the second node feature includes a first node sub-feature and/or a second node sub-feature;
the first node sub-feature is used for perceiving a global action in the node topology graph at the current time step; and
the second node sub-feature is used for perceiving a local action at the current time step.

In some embodiments, the second processing unit is specifically configured to:
input the node embedding and the visual cue feature into a first cross-modal encoder of the cross-modal neural network, to obtain the first node sub-feature.

In some embodiments, the second processing unit is specifically configured to:
inputting the contextual view representation and the visual cue feature into a second cross-modal encoder of the cross-modal neural network, to obtain the second node sub-feature.

In some embodiments, the second processing unit is specifically configured to:
in the case where the second node feature includes the first node sub-feature, input the first node sub-feature into the decision neural network, to obtain prediction scores for respective global navigation nodes; and
seek a navigation node with a prediction score that satisfies a target condition as the target navigation point.

In some embodiments, the second processing unit is specifically configured to:
in the case where the second node feature includes the first node sub-feature and the second node sub-feature, input the first node sub-feature into a first decision module of the decision neural network, to obtain prediction scores for respective global navigation nodes;
perform masking processing on the current node and the visited node among the prediction scores for the respective global navigation nodes, to obtain a first navigation point score set;
input the second node sub-feature into a second decision module, to obtain navigable prediction scores for surrounding navigation points of the current node, where the surrounding navigation points include a navigation node adjacent to the current node;
perform masking processing on the current node and the visited node among the navigable prediction scores for the surrounding navigation points, to obtain a second navigation point score set;
match, based on the second navigation point score set, the surrounding navigation points with a global action space, to obtain a third navigation point score set for the surrounding navigation points; and
perform fusion processing on the third navigation point score set and the first navigation point score set, to obtain a navigation point with a highest fusion score, and take the navigation point as the target navigation point.

In some embodiments, the second processing unit is specifically configured to:
determine a current navigation stage based on navigation progress;
determine a visual center region corresponding to the navigation stage in the visual navigation cue map;
generate a mask matrix based on a visual feature of the visual center region; and
perform, based on the mask matrix, the masking processing on the current node and the visited node among the navigable prediction scores for the surrounding navigation points, to obtain the second navigation point score set.

In some embodiments, the acquisition unit is specifically configured to:
map the connecting line with the visual indication information into the visual image according to positions, to obtain a mapped image; and
crop, from the mapped image, a local region, to obtain the visual navigation cue map, where the local region contains the connecting line with the visual indication information.

Based on the same technical concept, the embodiments of the present disclosure further provide an apparatus 800 for training a visual navigation model of an intelligent agent, as shown in FIG. 8, including:
an acquisition module 801 is configured to acquire a sample cue map, where the sample cue map includes a visualized navigation path; and
a training module 802 is configured to train the visual navigation model based on the sample cue map.

In some embodiments, the acquisition unit includes:
a mapping unit configured to map a sample space in a target sample set into a spatial image sample, to obtain layout information of the sample space; and
a generation unit configured to map a sample path of the target sample set onto the spatial image sample, to generate the sample cue map.

In some embodiments, the visual navigation model includes a visual neural network, a node neural network, a cross-modal neural network and a decision neural network;
the visual neural network is used to extract a visual cue feature of the sample cue map;
the node neural network is used to extract a first node feature in a node topology graph, where the node topology graph is established based on a real-time surrounding environment image of the intelligent agent in a sample space;
the cross-modal neural network is used to process the visual cue feature and the first node feature, to obtain a second node feature;
the decision neural network processes the second node feature, to obtain a target navigation point at each time step; and
the training module includes:
a first loss determination unit configured to perform contrastive learning on the first node feature and the visual cue feature, to obtain a contrastive learning loss;
a second loss determination unit configured to determine a path loss based on a sample path of the sample cue map and a predicted path, where the predicted path is obtained from a target navigation point at each time step predicted by the visual navigation model; and
an optimization unit configured to optimize a model parameter of the visual navigation model based on the contrastive learning loss and the path loss.

For the description of the specific functions and examples of each module and submodule of the apparatus in the embodiments of the present disclosure, reference may be made to the relevant description of the corresponding steps in the foregoing method embodiments, and details are not repeated here.

In the technical solution of the present disclosure, the acquisition, storage and application of any type of information such as the user's personal information involved are in compliance with relevant laws and regulations, and do not violate public order and good customs.

According to the embodiments of the present disclosure, the present disclosure also provides an electronic device, a readable storage medium and a computer program product.

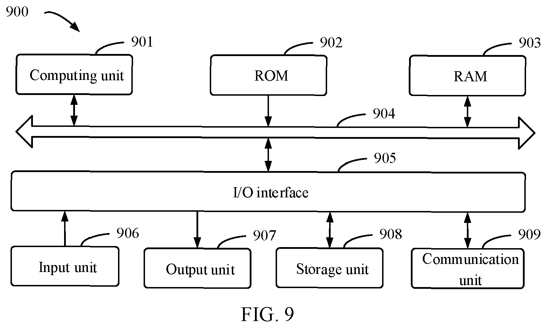

FIG. 9 shows a schematic block diagram of an exemplary electronic device 900 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 9, the device 900 includes a computing unit 901 that may perform various appropriate actions and processes according to a computer program stored in a Read-Only Memory (ROM) 902 or a computer program loaded from a storage unit 908 into a Random Access Memory (RAM) 903. Various programs and data required for operations of the device 900 may also be stored in the RAM 903. The computing unit 901, the ROM 902 and the RAM 903 are connected to each other through a bus 904. The Input/Output (I/O) interface 905 is also connected to the bus 904.

A plurality of components in the device 900 are connected to the I/O interface 905, and include an input unit 906 such as a keyboard, a mouse, or the like; an output unit 907 such as various types of displays, speakers, or the like; the storage unit 908 such as a magnetic disk, an optical disk, or the like; and a communication unit 909 such as a network card, a modem, a wireless communication transceiver, or the like. The communication unit 909 allows the device 900 to exchange information/data with other devices through a computer network such as the Internet and/or various telecommunication networks.

The computing unit 901 may be various general-purpose and/or special-purpose processing components with processing and computing capabilities. Some examples of the computing unit 901 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 901 performs various methods and processes described above, such as the method for navigating an intelligent agent/the method for training a visual navigation model of an intelligent agent. For example, in some implementations, the method for navigating an intelligent agent/the method for training a visual navigation model of an intelligent agent may be implemented as a computer software program tangibly contained in a computer-readable medium, such as the storage unit 908. In some implementations, a part or all of the computer program may be loaded and/or installed on the device 900 via the ROM 902 and/or the communication unit 909. When the computer program is loaded into the RAM 903 and executed by the computing unit 901, one or more steps of the method for navigating an intelligent agent/the method for training a visual navigation model of an intelligent agent described above may be performed. Alternatively, in other implementations, the computing unit 901 may be configured to perform the method for navigating an intelligent agent/the method for training a visual navigation model of an intelligent agent by any other suitable means (e.g., by means of firmware).

Various implementations of the system and technologies described above herein may be implemented in a digital electronic circuit system, an integrated circuit system, a Field Programmable Gate Array (FPGA), an Application Specific Integrated Circuit (ASIC), an Application Specific Standard Product (ASSP), a System On Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include an electrical connection based on one or more lines, a portable computer disk, a hard disk, a Random Access Memory (RAM), a Read-Only Memory (ROM), an Erasable Programmable Read-Only Memory (EPROM), a flash memory, an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display device (e.g., a Cathode Ray Tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A method for navigating an intelligent agent, comprising:
in response to a navigation path drawn on a visual image of a target scene, generating (S101) a visual navigation cue map;
collecting (S102) an environmental image of the intelligent agent in real time; and
matching (S103), based on a visual navigation model, a real-time collected environmental image with the visual navigation cue map, to control the intelligent agent to move along the navigation path.

2. The method of claim 1, wherein the navigation path comprises a plurality of path key points, and in response to the navigation path drawn on the visual image of the target scene, generating (S101) the visual navigation cue map, comprises:
performing line connection on the plurality of path key points sequentially in chronological order, and generating visual indication information pointing to a next path key point; and
adding a connecting line with the visual indication information into the visual image, to obtain the visual navigation cue map;
wherein the connecting line comprises a straight-line segment;
wherein the visual indication information comprises an arrow.

3. The method of claim 1, wherein the visual navigation model comprises a visual neural network, a node neural network, a cross-modal neural network and a decision neural network; and
matching, based on the visual navigation model, the real-time collected environmental image with the visual navigation cue map, to control the intelligent agent to move along the navigation path, comprises:
processing (S401), based on the visual neural network, the visual navigation cue map, to obtain a visual cue feature; and
for each time step of real-time collection of the environmental image, respectively performing (S402):
processing (S4021), based on the node neural network, an environmental image at a current time step and prior knowledge at the current time step, to obtain a first node feature; wherein the prior knowledge comprises a node topology graph and a collected environmental view; and the node topology graph comprises a current node where the intelligent agent is located, a visited node, and a navigable node;
processing (S4022), based on the cross-modal neural network, the visual cue feature and the first node feature, to obtain a second node feature;
processing (S4023), based on the decision neural network, the second node feature, to obtain a target navigation point at the current time step; and
controlling (S4024) the intelligent agent to move to the target navigation point at the current time step.

4. The method of claim 3, wherein processing, based on the node neural network, the environmental image at the current time step and the prior knowledge at the current time step, to obtain the first node feature, comprises:
updating, based on the environmental image at the current time step, the node topology graph, to obtain a node topology network at the current time step; and
inputting the environmental image at the current time step and environmental views of a plurality of nodes in the prior knowledge into the node neural network, to obtain the first node feature;
wherein the first node feature comprises a node embedding and/or a contextual view representation of a node.

5. The method of claim 4, wherein the node neural network comprises a node feature extraction module and a first encoding module; and inputting the environmental image at the current time step and the environmental views of the plurality of nodes in the prior knowledge into the node neural network, to obtain the first node feature, comprises:
extracting, based on the node feature extraction module, from the environmental image at the current time step and the environmental views of the plurality of nodes, a step number embedding feature and a position embedding feature of the current node, and a visual feature set of each of a plurality of environmental views of the current node; and
performing, based on the first encoding module, an encoding operation on the visual feature set, the step number embedding feature and the position embedding feature, to obtain the node embedding.

6. The method of claim 5, wherein the node neural network comprises the node feature extraction module and a second encoding module; and inputting the environmental image at the current time step and the environmental views of the plurality of nodes in the prior knowledge into the node neural network, to obtain the first node feature, comprises:
extracting, based on the node feature extraction module, from the environmental image at the current time step and the environmental views of the plurality of nodes, a directional embedding feature and a navigability type embedding feature of the current node; and
performing, based on the second encoding module, an encoding operation on the directional embedding feature, the navigability type embedding feature and the visual feature set, to obtain the contextual view representation of the node.

7. The method of any one of claims 4 to 6, wherein the second node feature comprises a first node sub-feature and/or a second node sub-feature;
the first node sub-feature is used for perceiving a global action in the node topology graph at the current time step; and
the second node sub-feature is used for perceiving a local action at the current time step.

8. The method of claim 7, wherein processing, based on the cross-modal neural network, the visual cue feature and the first node feature, to obtain the second node feature, comprises at least one of:
inputting the node embedding and the visual cue feature into a first cross-modal encoder of the cross-modal neural network, to obtain the first node sub-feature; or
inputting the contextual view representation and the visual cue feature into a second cross-modal encoder of the cross-modal neural network, to obtain the second node sub-feature.

9. The method of claim 7, wherein processing, based on the decision neural network, the second node feature, to obtain the target navigation point at the current time step, comprises:
in a case of the second node feature comprises the first node sub-feature, inputting the first node sub-feature into the decision neural network, to obtain prediction scores for respective global navigation nodes; and
seeking a navigation node with a prediction score that satisfies a target condition as the target navigation point.

10. The method of claim 7, wherein processing, based on the decision neural network, the second node feature, to obtain the target navigation point at the current time step, comprises:
in a case of the second node feature comprises the first node sub-feature and the second node sub-feature, inputting (S501) the first node sub-feature into a first decision module of the decision neural network, to obtain prediction scores for respective global navigation nodes;
performing (S502) masking processing on the current node and the visited node among the prediction scores for the respective global navigation nodes, to obtain a first navigation point score set;
inputting (S503) the second node sub-feature into a second decision module, to obtain navigable prediction scores for surrounding navigation points of the current node, wherein the surrounding navigation points comprise a navigation point adjacent to the current node;
performing (S504) the masking processing on the current node and the visited node among the navigable prediction scores for the surrounding navigation points, to obtain a second navigation point score set;
matching (S505), based on the second navigation point score set, the surrounding navigation points with a global action space, to obtain a third navigation point score set for the surrounding navigation points; and
performing (S506) fusion processing on the third navigation point score set and the first navigation point score set, to obtain a navigation point with a highest fusion score, and take the navigation point as the target navigation point.

11. The method of claim 10, wherein performing the masking processing on the current node and the visited node among the navigable prediction scores for the surrounding navigation points, to obtain the second navigation point score set, comprises:
determining a current navigation stage based on navigation progress;
determining a visual center region corresponding to the navigation stage in the visual navigation cue map;
generating a mask matrix based on a visual feature of the visual center region; and
performing, based on the mask matrix, the masking processing on the current node and the visited node among the navigable prediction scores for the surrounding navigation points, to obtain the second navigation point score set.

12. The method of claim 2, wherein adding the connecting line with the visual indication information to the visual image, to obtain the visual navigation cue map, comprises:
mapping the connecting line with the visual indication information into the visual image according to a position, to obtain a mapped image; and
cropping, from the mapped image, a local region, to obtain the visual navigation cue map, wherein the local region contains the connecting line with the visual indication information.

13. A method for training a visual navigation model of an intelligent agent, comprising:
acquiring (S601) a sample cue map, wherein the sample cue map comprises a visualized navigation path; and
training (S601) the visual navigation model based on the sample cue map.

14. The method of claim 13, wherein acquiring the sample cue map, comprises:
mapping a sample space in a target sample set into a spatial image sample, to obtain layout information of the sample space; and
mapping a sample path of the target sample set onto the spatial image sample, to generate the sample cue map.

15. The method of claim 13, wherein the visual navigation model comprises a visual neural network, a node neural network, a cross-modal neural network and a decision neural network;
the visual neural network is used to extract a visual cue feature of the sample cue map;
the node neural network is used to extract a first node feature in a node topology graph, wherein the node topology graph is established based on a real-time surrounding environment image of the intelligent agent in a sample space;
the cross-modal neural network is used to process the visual cue feature and the first node feature, to obtain a second node feature;
the decision neural network processes the second node feature, to obtain a target navigation point at each time step; and
training the visual navigation model based on the sample cue map comprises:
performing contrastive learning on the first node feature and the visual cue feature, to obtain a contrastive learning loss;
determining a path loss based on a sample path of the sample cue map and a predicted path, wherein the predicted path is obtained from a target navigation point at each time step predicted by the visual navigation model; and
optimizing a model parameter of the visual navigation model based on the contrastive learning loss and the path loss.
